# FASCICULE DE BREVET EUROPEEN

(11) **EP 1 722 621 B1**
(45) Date de publication et mention de la délivrance du brevet: **20.04.2011**
(21) Numéro de dépôt: 05730854.6
(22) Date de dépôt: 23.02.2005
(51) Int. Cl.: A01D 91/04

(54) **PROCEDE ET MACHINE POUR LA RECOLTE DE PLANTES FIBREUSES, NOTAMMENT DE LIN TEXTILE**
VERFAHREN UND MASCHINE ZUM ERNTEN VON FASERHALTIGEN PFLANZEN, INSBESONDERE FASERFLACHS
METHOD AND MACHINE FOR HARVESTING FIBROUS PLANTS, ESPECIALLY FIBRE FLAX

(30) Priorité: 23.02.2004 FR 0401758; 24.09.2004 FR 0410124
(43) Date de publication de la demande: 22.11.2006
(73) Titulaire: Dehondt, Guy, 76170 Auberville La Campagne (FR)
(72) Inventeur: Dehondt, Guy, 76170 Auberville La Campagne (FR)
(74) Mandataire: De Souza, Paula
(86) Numéro de dépôt international: PCT/FR2005/000423
(87) Numéro de publication internationale: WO 2005/082126

(56) Documents cités:
- EP-A- 0 941 649
- WO-A-01/39590
- BE-A- 1 009 591
- DE-A- 19 647 433
- FR-A- 2 671 687

## Description

La présente invention concerne un procédé pour la récolte de plantes fibreuses, notamment de lin textile, comprenant les étapes consistant à aligner les pieds des plantes après arrachage de celles-ci, à couper les pieds alignés et à déposer les plantes sans pied en andain sur le sol.

Actuellement, les plantes de lin textile sont maintenues en andain sur le sol entre deux et quatre semaines afin que l'humidité de l'air, la rosée et la pluie permettent leur rouissage en assurant la dégradation des ciments pectiques et ligneux qui lient les fibres entre elles.

Or, comme ce temps de séjour à terre est relativement long, la culture du lin textile ne peut être entreprise que dans des régions à conditions climatiques favorables, ce qui limite les quantités de fibres disponibles sur le marché mondial.

Par ailleurs, comme les capsules contenant les graines de lin reposent sur le sol pendant le rouissage, elles risquent d'être contaminées par des parasites, et la qualité des graines récoltées peut en être grandement affectée.

BE-A-1 009 591 divulgue un procédé de récolte de plantes fibreuses, notamment de lin, comprenant les étapes mentionnées au premier paragraphe ci-dessus.

Lors de la mise en oeuvre de ce procédé, les tiges de lin dont les pieds ont été coupés sont redéposées en andain avec leurs capsules. Or, les parasites présents sur le sol risquent d'affecter la qualité des graines contenues dans les capsules.

La présente invention se propose d'apporter une solution aux problèmes précités et, pour ce faire, elle a pour objet un procédé du type de celui décrit dans BE-A-1 009 591 et qui est caractérisé en ce qu'il comprend une étape consistant à couper les têtes des plantes après la coupe des pieds et avant la dépose en andain.

Lorsque les plantes de lin sans pied et sans tête sont disposées en andain sur le sol, l'air et l'humidité peuvent circuler plus facilement dans les faisceaux de fibres situés dans les tiges.

Une dégradation des ciments pectiques et ligneux liant les fibres peut donc se produire rapidement, par exemple en deux ou trois jours.

La mise en oeuvre du procédé selon l'invention permet par conséquent de réaliser le rouissage des plantes de lin bien plus rapidement que celle du procédé à terre conventionnel.

Les conditions climatiques deviennent ainsi moins contraignantes, ce qui permet d'étendre la culture du lin dans des régions plus vastes et d'augmenter les quantités de fibres textiles mises à la disposition des consommateurs.

Par ailleurs, comme les capsules de graines ne reposent plus sur le sol pendant le rouissage, les gaines risquant d'être perdues lors des manipulations ultérieures ou sous l'effet du simple séchage sur le sol peuvent être nettement moins nombreuses.

On ajoutera que du fait que la coupe des têtes n'est pas effectuée en même temps que la coupe des pieds, la mise en place de moyens pour manipuler, transporter ou trier les têtes et les pieds peut être facilitée.

Le procédé selon l'invention peut avantageusement comprendre une étape consistant à récupérer les pieds coupés afin de recycler ces derniers vers un débouché industriel.

Il peut également comprendre une étape consistant à récupérer les têtes coupées afin de pouvoir en extraire rapidement les capsules de graines qui pourront alors être stockées en vue d'un écapsulage ultérieur.

BE-A- 1 009 591 décrit par ailleurs une machine pour la récolte de plantes fibreuses, notamment de lin, comprenant des moyens pour aligner les pieds des plantes après arrachage de celles-ci, des moyens pour couper les pieds alignés, et des moyens pour déposer les plantes sans pied en andain sur le sol.

Cette machine n'est toutefois pas conçue pour couper et récupérer les têtes des plantes et éviter ainsi une dégradation de la qualité des graines au contact du sol.

Pour remédier à ce problème, la présente invention concerne également une machine du type de celle décrite dans le document susmentionné et qui est caractérisée en ce qu'elle comprend des moyens d'arrachage situés avant les moyens d'alignement et des moyens pour couper les têtes des plantes, ces moyens étant situés entre les moyens de coupe des pieds et les moyens de dépose en andain.

Du fait que les moyens de coupe des têtes sont décalés par rapport aux moyens de coupe des pieds, l'installation sur la machine de moyens pour manipuler, transporter ou trier les têtes et les pieds peut être facilitée.

La machine selon l'invention peut avantageusement comprendre des moyens pour régler la position des moyens de coupe en fonction de la longueur des plantes.

La longueur des tiges mises en andain peut donc ainsi être ajustée en fonction de la taille des plantes afin de pouvoir disposer de fibres les plus longues possibles.

Les risques pour que des pieds et/ou des têtes restent solidaires des tiges sectionnées peuvent en outre être éliminés.

Par ailleurs, la machine selon l'invention peut avantageusement comprendre des moyens pour récupérer les pieds coupés et/ou les têtes coupées.

La récupération des têtes est assurée afin d'extraire de celles-ci les capsules contenant les graines qui sont utilisables par exemple pour la production de semence, d'huile ou de complément pour l'alimentation animale.

Selon une caractéristique importante de l'invention, la machine comprend une cabine de conduite située à l'avant et en position centrale.

Le conducteur peut ainsi voir parfaitement aussi bien l'espace situé devant lui que l'espace situé le long de chacun des côtés longitudinaux de la machine.

La position centrale de la cabine permet en outre d'équiper la machine de deux ensembles de récolte disposés de part et d'autre de son axe longitudinal, chaque ensemble comprenant des moyens pour arracher les tiges, des moyens pour aligner les pieds, des moyens pour couper les pieds et les têtes, des moyens pour récupérer les pieds et les têtes coupés, et des moyens pour déposer en andain les tiges sans pied et sans tête.

Une telle disposition permet à la machine d'avoir un meilleur rendement horaire et de contribuer par conséquent à une réduction du coût de la récolte.

Avantageusement, la machine selon l'invention peut comprendre une seule trémie pour récupérer les pieds et une seule trémie pour récupérer les têtes.

Un mode d'exécution de la présente invention sera décrit ci-après à titre d'exemple nullement limitatif en référence aux dessins annexés dans lesquels:

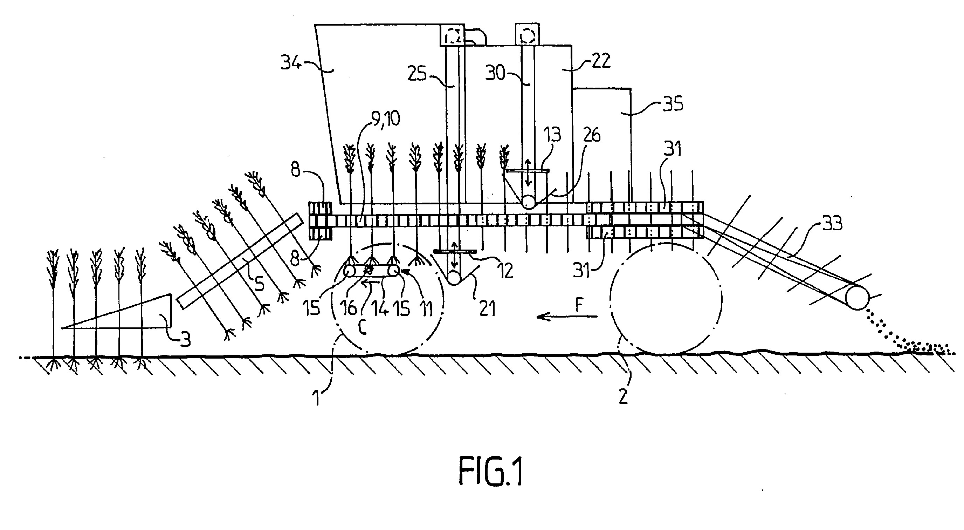

- la figure 1 est une vue de côté schématique d'une machine conforme à l'invention;
- la figure 2 est une vue de dessus schématique de la machine visible sur la figure 1;
- la figure 3 est une vue schématique à plus grande échelle des disques de coupe et des courroies d'entraînement visibles à la partie supérieure de la figure 2 ; et
- la figure 4 est une vue en coupe schématique selon la ligne IV-IV de la figure 3.

La machine représentée schématiquement sur les dessins repose sur des roues avant 1 et des roues arrière 2 et se déplace dans le sens de la flèche F lorsqu'elle est utilisée pour effectuer la récolte de plantes de lin parvenues à maturité.

Elle comprend tout d'abord à sa partie avant une série de diviseurs 3 disposés les uns à côté des autres et s'effilant de leur extrémité postérieure à leur extrémité antérieure.

Les diviseurs 3 délimitent entre eux des espaces libres 4 se rétrécissant en direction de leur extrémité postérieure et destinés chacun à recevoir deux ou trois rangs de plantes de lin.

La machine de récolte comprend également des moyens d'arrachage 5 situés immédiatement après les diviseurs 3.

Dans le mode de réalisation représenté, les moyens d'arrachage 5 sont constitués par des courroies disposées deux par deux dans le prolongement des extrémités postérieures des espaces libres 4 ménagés entre les diviseurs.

Les deux courroies 6 et 7 d'un même couple passent chacune sur deux poulies et s'appuient l'une contre l'autre sur la partie de leur trajectoire qui est dans le prolongement de l'espace libre 4 correspondant.

Elles sont destinées à se déplacer dans le sens de la flèche A sous la commande de moyens d'entraînement conventionnels non représentés et à arracher les plantes passant entre leurs brins en contact lorsque la machine se déplace dans le sens de la flèche F.

En fait, les courroies 6 et 7 associées ont également pour fonction d'entraîner les plantes arrachées vers l'extrémité postérieure de leurs brins en contact, en vue de leur traitement ultérieur.

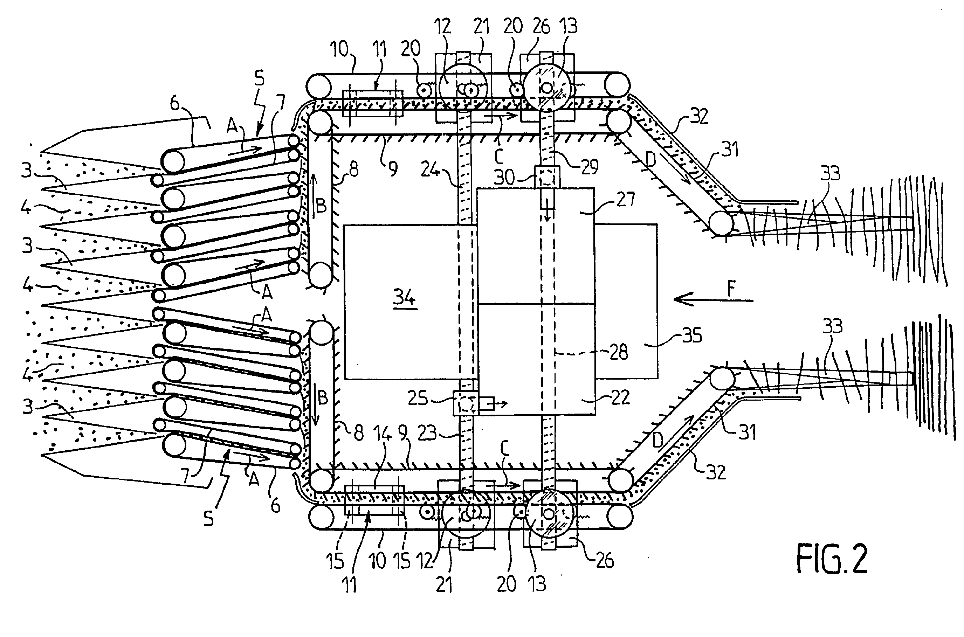

Comme le montre clairement la figure 2, les moyens d'arrachage 5 comprennent 4 couples de courroies disposés de part et d'autre de l'axe longitudinal de la machine et constituent deux ensembles d'arrachage symétriques par rapport à cet axe.

A la sortie des deux ensembles d'arrachage, les plantes de lin sont dirigées vers les côtés longitudinaux de la machine par des courroies transversales 8 disposées symétriquement par rapport à l'axe longitudinal de celle-ci.

Les courroies 8 sont disposées deux par deux l'une au dessus de l'autre et sont déplaçables dans le sens des flèches B sous la commande d'organes d'entraînement conventionnels non représentés.

Lorsque les plantes arrachées parviennent au niveau de chacun des côtés longitudinaux de la machine, elles sont prises entre deux courroies longitudinales 9, 10 disposées l'une en face de l'autre.

Les brins en regard de ces courroies s'étendent au-dessus de moyens 11 prévus pour aligner les pieds des plantes, ainsi que de part et d'autre de moyens 12, 13 prévus les premiers pour couper les pieds et les deuxièmes pour couper les têtes des plantes.

Les moyens d'alignement 11 situés d'un même côté de la machine comprennent une bande sans fin 14 passant sur deux rouleaux horizontaux 15 et déplaçable dans le sens de la flèche C sous la commande d'organes d'entraînement conventionnels non représentés. Ils comprennent également un organe vibrant 16 disposé sous le brin supérieur de la bande sans fin 14 correspondante.

Quant aux moyens de coupe 12 et 13 situés d'un même côté de la machine, ils sont constitués par deux disques rotatifs décalés longitudinalement par rapport au sens d'avancement de la machine et s'étendant horizontalement dans deux plans situés à des hauteurs différentes.

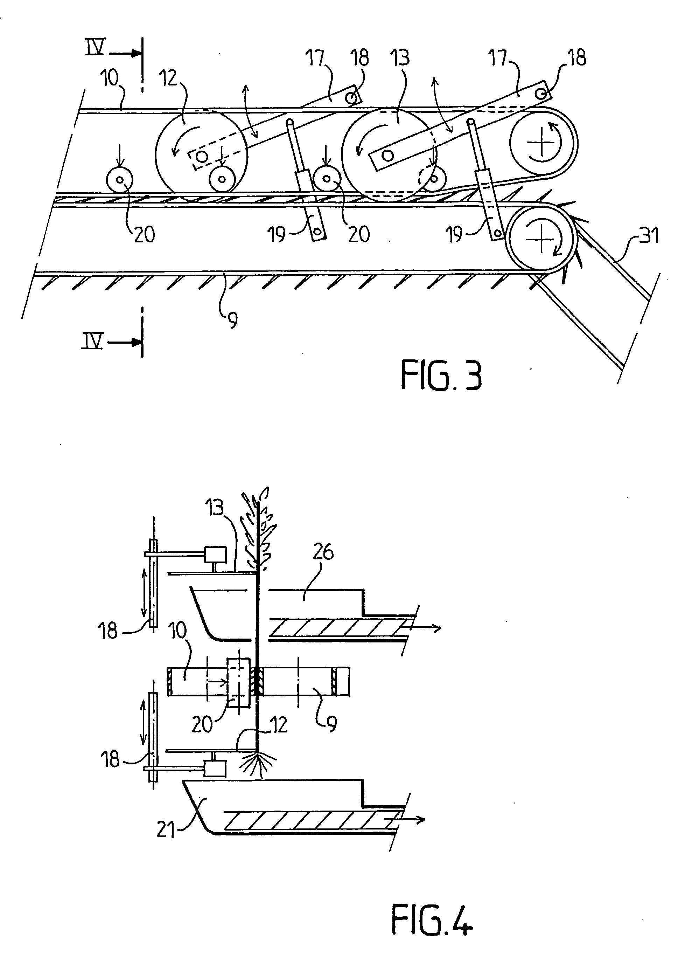

En se référant aux figures 3 et 4, on pourra constater que chacun des disques 12 et 13 est porté par un bras 17 articulé sur un support vertical 18 et pouvant pivoter sur le support sous la commande d'un vérin 19.

Grâce à ce montage particulier, les disques 12 et 13 peuvent donc être amenés dans des positions prédéterminées par rapport aux brins adjacents des courroies 9 et 10, afin que la coupe des pieds et des têtes puisse être effectuée dans les meilleures conditions possibles.

En se référant en particulier à la figure 4, on pourra également constater que les supports 18 sont déplaçables en hauteur afin d'ajuster la position des disques 12 et 13 en fonction de la taille des plantes de lin.

Les brins adjacents de chaque couple de courroies 9 et 10 délimitent entre eux un couloir relativement large s'étendant sur une distance allant de leur extrémité antérieure à une zone adjacente à l'extrémité postérieure des moyens d'alignement 11 correspondants.

Les plantes arrachées peuvent ainsi librement descendre dans chaque couloir jusqu'à ce que leurs pieds viennent reposer contre la bande sans fin'14 correspondante.

Lors de leur entraînement dans le sens des flèches C, les plantes viennent donc s'appuyer contre les bandes 14 en se positionnant toutes à la même hauteur sous l'effet des vibrations engendrées par les organes vibrants 16.

En arrière des moyens d'alignement 11, les brins adjacents des courriers 9 et 10 délimitent entre eux un couloir étroit s'étendant jusqu'à leur extrémité postérieure.

Dans ce couloir étroit, les tiges sont maintenues fermement pendant leur entraînement dans le sens de la flèche C, ce qui permet aux disques 12 et 13 de couper franchement leur pied puis leur tête.

En se référant plus particulièrement aux figures 3 et 4, on remarquera que des galets 20 sont appliqués contre la face interne du brin actif de chaque courroie 10 par des organes presseurs non représentés, réduisant ainsi la largeur du couloir correspondant sur une distance commençant avant le disque 12 et se terminant après le disque 13.

Lorsque les pieds des plantes de lin sont coupés, ils parviennent dans deux cavités 21 situées au voisinage des côtés longitudinaux de la machine et à partir desquelles ils sont transférés dans une trémie de stockage 22 par deux vis sans fin 23, 24 et un dispositif élévateur 25.

De même, lorsque les têtes des plantes de lin sont coupées, elles parviennent dans deux cavités 26 situées au voisinage des cavités 21 et à partir desquelles elles sont transférées dans une trémie de stockage 27 par deux vis sans fin 28, 29 et un dispositif élévateur 30.

Lorsque les tiges des plantes coupées parviennent à l'extrémité postérieure des brins en contact des courroies 9 et 10, elles sont dirigées vers l'arrière de la machine par des courroies 31 disposées symétriquement par rapport à l'axe longitudinal de celle-ci.

Les courroies 31 sont disposées deux par deux l'une au-dessus de l'autre et entraînent les tiges des plantes dans le sens des flèches D en coopérant avec des parois 32 du châssis de la machine.

Des organes d'entraînement conventionnels sont bien entendu prévus pour entraîner les courroies 31 dans le sens des flèches D.

En se référant à la figure 2, on remarquera que les courroies 31 sont disposées obliquement par rapport à l'axe longitudinal de la machine, leurs extrémités postérieures étant les plus proches.

Bien que cela ressorte de la description précédente, on précisera ici que les plantes sont entraînées dans le sens des flèches B, C et D en étant maintenues verticales.

Lorsque les tiges des plantes parviennent à l'extrémité postérieure des courroies 31, elles sont transférées à des dispositifs d'orientation conventionnels 33 conçus pour les positionner horizontalement et les déposer sur le sol sous la forme de deux andains parallèles.

Il convient de noter que la machine comporte une cabine de conduite 34 située à l'avant et en position centrale afin de permettre au conducteur d'avoir une vue parfaite sur les plantes à arracher ainsi que sur les côtés longitudinaux de la machine.

Enfin, on précisera que le moteur thermique 35 de la machine est situé derrière les trémies 27 et 28.

Dans la machine qui vient d'être décrite, les moyens assurant la coupe des pieds et des têtes des plantes sont constitués par des disques 12 et 13.

Il va de soi cependant que ces disques pourraient être remplacés par des lames de coupe sans que l'on sorte pour autant du cadre de la présente invention.

## Revendications

1. Procédé pour la récolte de plantes fibreuses, notamment de lin textile, comprenant les étapes consistant à aligner les pieds des plantes après arrachage de celles-ci, à couper les pieds alignés et à déposer les plantes sans pied en andain sur le sol, **caractérisé en ce qu'**il comprend une étape consistant à couper les têtes des plantes après la coupe des pieds et avant la dépose en andain.

2. Procédé selon la revendication 1, **caractérisé en ce qu'**il comprend une étape consistant à récupérer les pieds coupés.

3. Procédé selon la revendication 1 ou 2, **caractérisé en ce qu'**il comprend une étape consistant à récupérer les têtes coupées.

4. Machine pour la récolte de plantes fibreuses, notamment de lin, comprenant des moyens d'arrachage (5), des moyens (11) pour aligner les pieds des plantes arrachées, les moyens d'arrachage (5) étant situés avant les moyens d'alignement (11), des moyens (12) pour couper les pieds alignés, et des moyens (33) pour déposer les plantes sans pied en andain sur le sol, **caractérisée en ce qu'**elle comprend des moyens (13) pour couper les têtes des plantes, ces moyens étant situés entre les moyens (12) de coupe des pieds et les moyens (33) de dépose en andain.

5. Machine selon la revendication 4, **caractérisée en ce qu'**elle comprend des moyens pour régler la position des moyens de coupe (12, 13) en fonction de la longueur des plantes.

6. Machine selon la revendication 4 ou 5, **caractérisée en qu'**elle comprend en outre des moyens (22) pour récupérer les pieds coupés.

7. Machine selon l'une quelconque des revendications 4 à 6, **caractérisée en ce qu'**elle comprend en outre des moyens (27) pour récupérer les têtes coupées.

8. Machine selon l'une quelconque des revendications 4 à 7, **caractérisée en ce qu'**elle comprend une cabine de conduite (34) située à l'avant et en position centrale.

9. Machine selon la revendication 8, **caractérisée en ce qu'**elle comprend deux ensembles de récolte disposés de part et d'autre de son axe longitudinal, chaque ensemble comprenant des moyens (5) pour arracher les plantes, des moyens (11) pour aligner les pieds, des moyens (12, 13) pour couper les pieds et les têtes, des moyens (22,27) pour récupérer les pieds et les têtes coupés et des moyens (33) pour déposer en andain les tiges sans pied et sans tête.

10. Machine selon la revendication 9, **caractérisée en ce qu'**elle comprend une seule trémie (22) pour récupérer les pieds et une seule trémie (27) pour récupérer les têtes.

## Claims

1. Method for harvesting fibrous plants, especially fibre flax, comprising the steps consisting in aligning the butts of the plants after the latter have been pulled up, cutting off the aligned butts and placing the plants without butts in a windrow on the ground, **characterized in that** it comprises a step consisting in cutting off the heads of the plants after the butts have been cut and before placement in the windrow.

2. Method according to Claim 1, **characterized in that** it comprises a step consisting in collecting the cut butts.

3. Method according to Claim 1 or 2, **characterized in that** it comprises a step consisting in collecting the cut heads.

4. Machine for harvesting fibrous plants, especially flax, comprising means (5) for pulling up, means (11) for aligning the butts of the pulled-up plants, the means (5) for pulling up being situated in front of the alignment means (11), means (12) for cutting off the aligned butts, and means (33) for placing the plants without butts in a windrow on the ground, **characterized in that** it comprises means (13) for cutting off the heads of the plants, these means being situated between the means (12) for cutting off the butts and the means (33) for placing in the windrow.

5. Machine according to Claim 4, **characterized in that** it comprises means for adjusting the position of the cutting means (12, 13) depending on the length of the plants.

6. Machine according to Claim 4 or 5, **characterized in that** it also comprises means (22) for collecting the cut butts.

7. Machine according to any one of Claims 4 to 6, **characterized in that** it also comprises means (27) for collecting the cut heads.

8. Machine according to any one of Claims 4 to 7, **characterized in that** it comprises a driver's cabin (34) situated at the front and in a central position.

9. Machine according to Claim 8, **characterized in that** it comprises two harvesting assemblies placed on either side of its longitudinal axis, each assembly comprising means (5) for pulling up the plants, means (11) for aligning the butts, means (12, 13) for cutting off the butts and the heads, means (22, 27) for collecting the cut butts and heads, and means (33) for placing the stems without butts and without heads in a windrow.

10. Machine according to Claim 9, **characterized in that** it comprises a single hopper (22) for collecting the butts and a single hopper (27) for collecting the heads.

## Patentansprüche

1. Verfahren zur Ernte von Faserpflanzen, insbesondere von Flachs, umfassend die Schritte der Ausrichtung der Wurzelteile der Pflanzen nach dem Ausraufen derselben, des Abschneidens der ausgerichteten Wurzelteile und der Ablage der Pflanzen ohne Wurzelteile in Schwadlage in der Sonne, **dadurch gekennzeichnet, dass** es einen Schritt des Abschneidens der Kopfteile der Pflanzen nach dem Abschneiden der Wurzelteile und vor der Ablage in Schwadlage umfasst.

2. Verfahren nach Anspruch 1, **dadurch gekennzeichnet, dass** es einen Schritt der Sammlung der abgeschnittenen Wurzelteile umfasst.

3. Verfahren nach Anspruch 1 oder 2, **dadurch gekennzeichnet, dass** es einen Schritt der Sammlung der abgeschnittenen Kopfteile umfasst.

4. Maschine zur Ernte von Faserpflanzen, insbesondere von Flachs, umfassend Mittel (5) zum Ausraufen, Mittel (11) zur Ausrichtung der Wurzelteile der ausgerauften Pflanzen, wobei die Mittel (5) zum Ausraufen vor den Mitteln (11) zur Ausrichtung angeordnet sind, Mittel (12) zum Abschneiden der ausgerichteten Wurzelteile, und Mittel (33) zur Ablage der Pflanzen ohne Wurzelteile in Schwadlage in der Sonne, **dadurch gekennzeichnet, dass** sie Mittel (13) zum Abschneiden der Kopfteile der Pflanzen umfasst, wobei diese Mittel zwischen den Mitteln (12) zum Abschneiden der Wurzelteile und den Mitteln (33) zur Ablage in Schwadlage angeordnet sind.

5. Maschine nach Anspruch 4, **dadurch gekennzeichnet, dass** sie Mittel zur Einstellung der Position der Mittel (12, 13) zum Abschneiden in Abhängigkeit von der Länge der Pflanzen umfasst.

6. Maschine nach Anspruch 4 oder 5, **dadurch gekennzeichnet, dass** sie darüber hinaus Mittel (22) zur Sammlung der abgeschnittenen Wurzelteile umfasst.

7. Maschine nach einem der Ansprüche 4 bis 6, **dadurch gekennzeichnet, dass** sie darüber hinaus Mittel (27) zur Sammlung der abgeschnittenen Kopfteile umfasst.

8. Maschine nach einem der Anbprüche 4 bis 7, **dadurch gekennzeichnet, dass** sie einen Führerstand (34) umfasst, der vorne und in zentraler Position angeordnet ist.

9. Maschine nach Anspruch 8, **dadurch gekennzeichnet, dass** sie zwei Anordnungen zur Sammlung umfasst, die auf beiden Seiten ihrer Längsachse angeordnet sind, wobei jede Anordnung Mittel (5) zum Ausraufen der Pflanzen, Mittel (11) zur Ausrichtung der Wurzelteile, Mittel (12, 13) zum Abschneiden der Wurzelteile und Kopfteile, Mittel (22, 27) zur Sammlung der abgeschnittenen Wurzelteile und Kopfteile sowie Mittel (33) zur Ablage der Stängel ohne Wurzelteil und Kopfteil in Schwadlage umfasst.

10. Maschine nach Anspruch 9, **dadurch gekennzeichnet, dass** sie einen einzelnen Trichter (22) zur Sammlung der Wurzelteile und einen einzelnen Trichter (27) zur Sammlung der Kopfteile umfasst.
